# EUROPÄISCHE PATENTSCHRIFT

(11) **EP 0 581 778 B1**
(45) Veröffentlichungstag und Bekanntmachung des Hinweises auf die Patenterteilung: **07.06.1995**
(21) Anmeldenummer: 92906086.1
(22) Anmeldetag: 04.03.1992
(51) Int. Cl.: G11B 33/04, G11B 33/02, G11B 33/08

(54) **VERPACKUNGSEINRICHTUNG FÜR MAGNETBANDWICKEL**
PACKING-CONTAINER SYSTEM FOR COILS OF MAGNETIC TAPE
DISPOSITIF D'EMBALLAGE POUR BOBINES PLATES DE BANDE MAGNETIQUE

(30) Priorität: 22.04.1991 DE 9104918 U
(43) Veröffentlichungstag der Anmeldung: 09.02.1994
(73) Patentinhaber: IBSM Mehltretter GmbH, D-80686 München (DE)
(72) Erfinder: MEHLTRETTER, Michael, D-8000 München 21 (DE)
(74) Vertreter: Pellmann, Hans-Bernd, Dipl.-Ing.
(86) Internationale Anmeldenummer: EP9200487
(87) Internationale Veröffentlichungsnummer: WO9218979

(56) Entgegenhaltungen:
- EP-A- 0 328 260
- PATENT ABSTRACTS OF JAPAN, unexamined applications, Sektion P, Band 11, Nr.366, 28. November 1987, THE PATENT OFFICE JAPANESE GOVERNMENT,Seite 2 P 641, Kokai-Nr. 62-137 788
- PATENT ABSTRACTS OF JAPAN, unexamined applications, Sektion P, Band 9, Nr. 246,03. Oktober 1985, THE PATENT OFFICE JAPANESE GOVERNMENT, Seite 125 P 393, Kokai-Nr. 60-98 589

## Beschreibung

Die Erfindung bezieht sich auf eine Verpackungseinrichtung für Magnetbandwickel bzw. sogenannte Pancakes gemäß dem Oberbegriff des Anspruchs 1.

Als Pancakes werden Magnetbandwickel bezeichnet, die für gewöhnlich einen Durchmesser bis ca. 40 cm aufweisen und aus einer Vielzahl von präzise übereinanderliegenden Bandwicklungen bestehen. Diese Pancakes stellen hinsichtlich ihrer Herstellung und der Art der verwendeten Materialien kostenintensive Zwischenprodukte dar, die über zum Teil sehr weite Entfernungen vom Hersteller zu weiterverarbeitenden Betrieben transportiert werden müssen. Bei derartigen Transporten muß jedoch gewährleistet sein, daß die mit großer Präzision gewickelten Pancakes, nicht durch übermäßige Erschütterungen in sich verwölben oder durch Verschmutzung beschädigt werden. Aus diesem Grund ist eine aufwendige Verpackung der Magnetbandwickel für einen sicheren Transport notwendig.

Aus dem Stand der Technik sind z.B. Verpackungseinrichtungen bekannt, die zur Aufnahme eines einzelnen Pancakes geeignet sind Diese Verpackungseinrichtungen sind meist aus einem schwingungs- und schlagabdämpfenden Material, zum Beispiel aus Styropor, hergestellt, so daß der Pancake vor gefährlichen Vibrationen und Stößen geschützt ist. Überdies hat ein derartiges Verpackungsmaterial die Eigenschaft, daß es sich bei einem Aufprall plastisch verformt und somit Energie, die zur Beschädigung des Pancakes führen könnte, absorbiert. Das Verpackungskonzept gemäß dem Stand der Technik sieht demzufolge eine bewußte Verformung oder gar Zerstörung der Verpackung bei einem Aufprall zum Schutze ihres Inhalts vor und ist demnach prinzipiell als eine Einwegverpackung ausgelegt. Eine derartige Verpackung schafft jedoch in Anbetracht der hiervon benötigten Menge ein erhebliches Abfallproblem und bringt zudem hohe Verpackungs- bzw. Verpackungsmaterialkosten mit sich.

Da jeder einzelne Pancake für sich verpackt ist, wird zudem ein erhöhter Bedarf an Laderaum für den Transport einer bestimmten Stückzahl an Pancakes erforderlich.

Der Erfindung liegt die Aufgabe zugrunde, eine kostengünstige, wiederverwendbare Verpackungseinrichtung zum sicheren Transport von Magnetbandwickeln bzw. sogenannten Pancakes zu schaffen.

Diese Aufgabe wird bei einer gattungsgemäßen Verpackungseinrichtung durch die kennzeichnenden Merkmale des Anspruchs 1 gelöst. Das Verpackungsvolumen für jeden Pancake wird durch das Verpacken mehrerer Pancakes in einem Sammelbehälter erheblich verringert und die Verpackungskosten dabei gesenkt. Durch die kraftabsorbierende Lagerung des Sammelbehälters innerhalb des Traggerüsts wird eine Übertragung von äußeren Schwingungen bzw. Vibrationen auf den Sammelbehälter abgedämpft. Außerdem werden von außen einwirkende Kräfte vom Traggerüst aufgenommen, so daß keine wesentliche Verformung oder gar Zerstörung des Sammelbehälters bei normalem Transportbetrieb auftritt. Somit kann die Verpackungseinrichtung vielfach wiederverwendet werden.

Durch die gemäß Anspruch 2 und 3 vorgesehene Ausbildung werden bei einer geringfügigen Deformation des Traggerüsts infolge eines Aufpralls vorwiegend Schubspannungen in die rückseitige Platte des Sammelbehälters eingeleitet, die zu keiner Verwölbung bzw. keiner Verformung des Sammelbehälters führen können. Die gesamte Verpackungseinrichtung bleibt demnach zur erneuten Wiederverwendung funktionstüchtig. Im übrigen läßt sich durch eine derartige Ausbildung der Verpackungseinrichtung die Reinigung des Sammelbehälters auf einfache Weise ausführen.

Weiterhin ist es von Vorteil, daß gemäß Anspruch 5 bis 16 die Aufnahmeeinrichtungen für die Pancakes innerhalb des Sammelbehälters als freitragende Dorne mit mindestens einer Längsnut und einem verschiebbaren Anschlag ausgebildet und von einer Vorderseite frei zugänglich sind, da hierdurch ein automatisches Be- und Entladen des Sammelbehälters und damit die Einführung der Verpackungseinrichtung in den integrierten Materialfluß kostengünstig ermöglicht wird.

Die Ausbildung gemäß Anspruch 18 bis 19 erlaubt eine staubfreie Aufbewahrung der zu transportierenden Pancakes, so daß damit die Gefahr einer Beschädigung durch Verschmutzung weitestgehend beseitigt ist.

Die Erfindung wird nachstehend anhand eines bevorzugten Ausführungsbeispiels unter Bezugnahme auf die Zeichnungen näher erläutert.
Fig. 1 zeigt eine Perspektivenansicht einer erfindungsgemäßen Verpackungseinrichtung in geöffnetem Zustand;
Fig. 2 zeigt eine Perspektivenansicht der Rückseite einer erfindungsgemäßen Verpackungsvorrichtung;
Fig. 3 zeigt eine Draufsicht einer vorderen Abdeckplatte eines Sammelbehälters;
Fig.4 zeigt eine Querschnittansicht mit einer Dichtung zwischen der Abdeckplatte und dem Sammelbehälter.

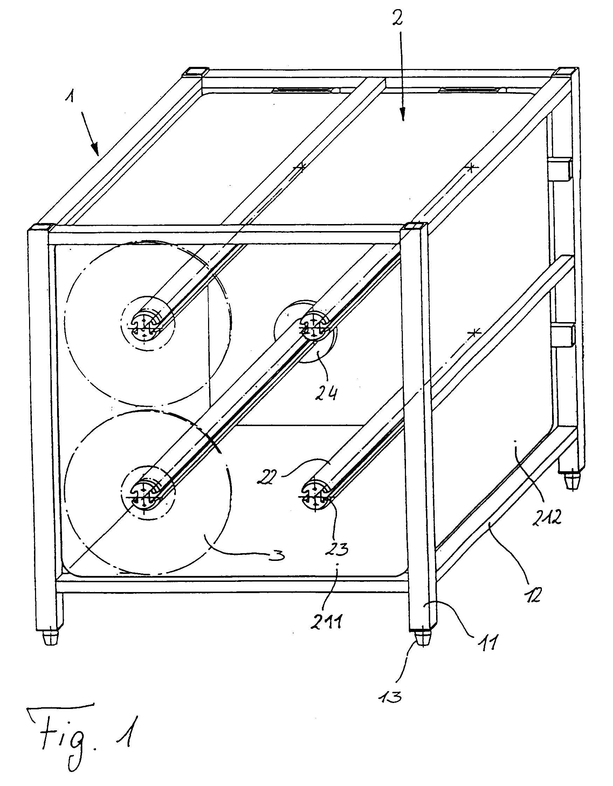

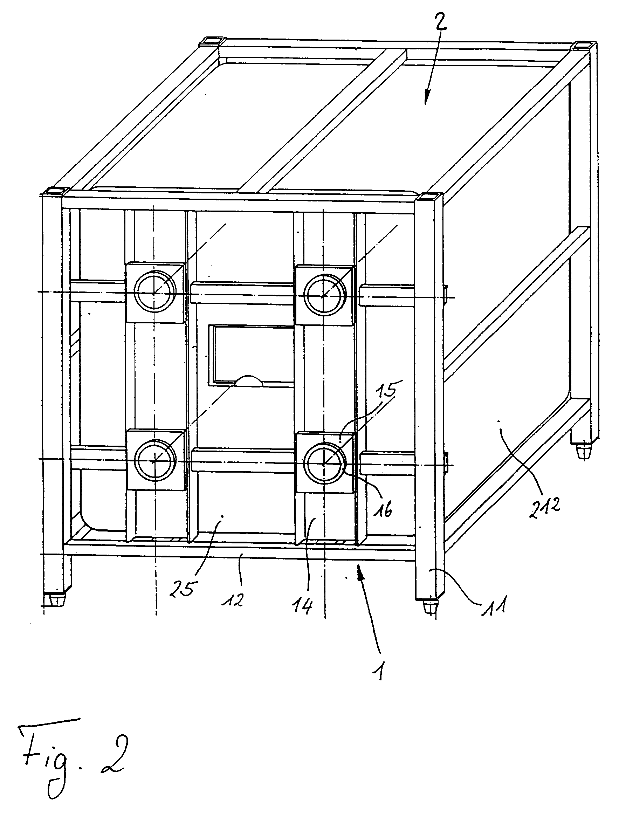

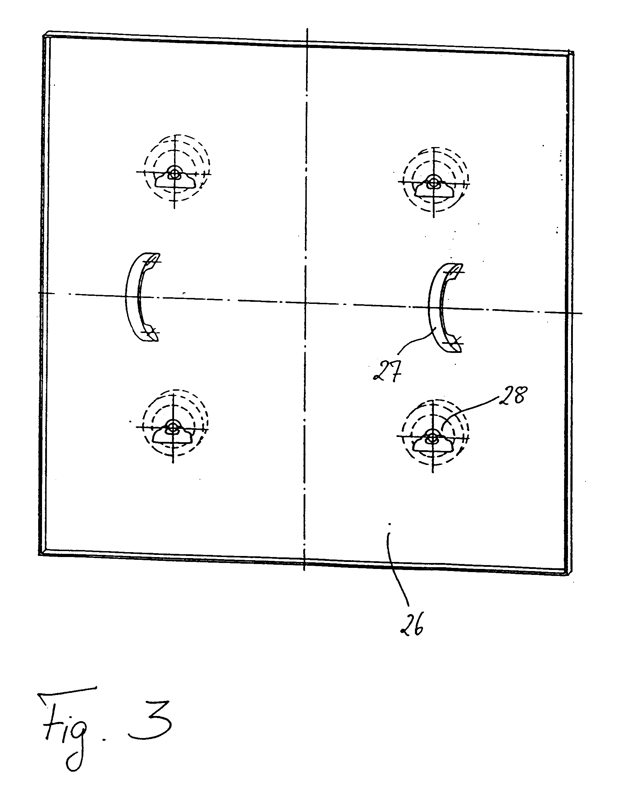

Gemäß Fig. 1 und 2 besteht eine Verpackungseinrichtung für Magnetbandwickel 3 bzw. Pancakes aus einem äußeren kastenförmigen Traggerüst 1 und einem ebenfalls kastenförmigen inneren Sammelbehälter 2, die beide auf einer Seite, der Beschickungsseite (211) offen sind, wobei im vorliegenden Fall diese die Vorderseite bildende Seite (211) vertikal steht. Das Traggerüst 1 ist dabei als Fachwerkkonstruktion derart ausgelegt, daß es den Sammelbehälter 2 vollständig umgibt. Das Traggerüst 1 wird durch eine Vielzahl von profilierten Holmen 11 und Stegen 12, 14 gebildet, die zu einem Käfig miteinander verbunden sind. Hierbei bilden vier rohrförmige Holme 11 die vertikalen Eckkanten des Käfigs, während die Seitenteile jeweils durch drei in gleichem Abstand voneinander horizontal angeordnete, rohrförmige Stege 12 gebildet werden, die jeweils an ihren beiden Stirnseiten rechtwinklig mit den jeweiligen Holmen 11 verschweißt sind. Die unteren Stirnseiten der rohrförmigen Holme 11 sind mittels vorstehender Zapfen 13 verschlossen, die bei Übereinanderstapeln von mehrern Verpackungseinrichtungen jeweils in die oberen Stirnseiten der Holme 11 einer unteren Verpackungseinrichtung eingreifen und somit eine stabile, unverrückbare Verbindung schaffen. Die Vorderseite des Traggerüsts 1 wird durch zwei horizontal verlaufende Stege 12 gebildet, die am oberen bzw. unteren Endabschnitt der jeweiligen Holme 11 angebracht sind. An der Rückseite 25 des Traggerüsts 1 sind vier horizontal, im Höhenabstand zueinander verlaufende Stege 12 angeordnet, die zwei gleichmäßig über die Breite verteilte vertikale, als Stützstreben ausgebildete Stege 14 aus einem U-Profil durchdringen. Das U-Profil ist an den dabei gebildeten Kreuzungspunkten jeweils durch eine eingeschweißte Platte 15 ausgesteift. Zwischen der Platte 15 und dem Grundelement des U-Profils ist ein Rohrstück 16 eingefügt, welches zwei gegenüberliegende Bohrungen in der Platte 15 bzw. im Grundelement miteinander verbindet.

Anstelle des vorstehend beschriebenen Traggerüsts 1 könnte auch eine andere denkbare Konstruktion für ein statisch bestimmtes Tragwerk vorgesehen werden.

Der innere Sammelbehälter 2 hat eine in sich geschlossene Wandung, die aus mehreren Platten zusammengesetzt ist und eine glatte, ebene Innenfäche bildet. Die Vorderseite 211 des Sammelbehälters 2 wird hierbei durch eine abnehmbare Abdeckplatte 26 gebildet, die durch die Vorderseite des Traggerüsts 1 frei zugänglich ist. Der Sammelbehälter 2 ist an seiner Rückseite 25 freitragend am Traggerüst 1 befestigt, so daß zwischen den Seitenteilen 212 des Sammelbehälters 2 und den Seitenteilen des Traggerüsts 1 ein Spalt verbleibt. An der Rückseite 25 des Sammelbehälters 2 ist zudem ein von außen frei zugänglicher Dokumentenbehälter zur Aufnahme von Schriftstücken in DIN A4 und DIN A5-Größe angeordnet.

In dem Sammelbehälter 2 sind mehrere Aufnahmevorrichtungen in der Form von horizontal, parallel zueinander verlaufenden Dornen 22 angeordnet, die jeweils die Rückseite 25 des Sammelbehälters 2 an dafür vorgesehenen Ausnehmungen durchdringen und an den Kreuzungspunkten der Traggerüstrückseite biegesteif in den Rohrstücken 16 eingespannt bzw. eingeklebt sind. Der Abstand zwischen den Dornen 22 untereinander, bzw. zu den Seitenteilen 212 ist derart gewählt, daß keine Berührung zweier parallel zueinander aufgeschobener Pancakes 3 untereinander, bzw. mit den Seitenteilen 212 möglich ist. Die Länge der Dorne 22 entspricht der Breite eines Pancakesatzes, d. h. einem vielfachen der Breite eines einzelnen Pancakes 3. Jeder Dorn 22 weist dabei zwei gegenüberliegende Längsnuten 23 auf, die sich über die gesamte Länge des Dorns 22 erstrecken. Die vorderen Stirnseiten der Dorne 22, die in Richtung der offenen Vorderseite 211 des Sammelbehälters 2 zeigen, sind mit einer angefasten Kante ausgebildet. Auf jeden Dorn 22 ist eine Kreisringplatte 24 aufgeschoben, die mit einer Stirnfläche an der Rückseite 25 des Sammelbehälters 2 anliegt. Von der anderen Stirnfläche der Kreisringplatte 24 ragen zwei nicht gezeigte Mitnehmerhaken rechtwinklig vor, welche in den beiden Längsnuten 23 des jeweiligen Dorns 22 geführt werden. Der Durchmesser der Kreisringplatte 24 entspricht vorzugsweise etwa dem Durchmesser eines Pancake-Kerns.

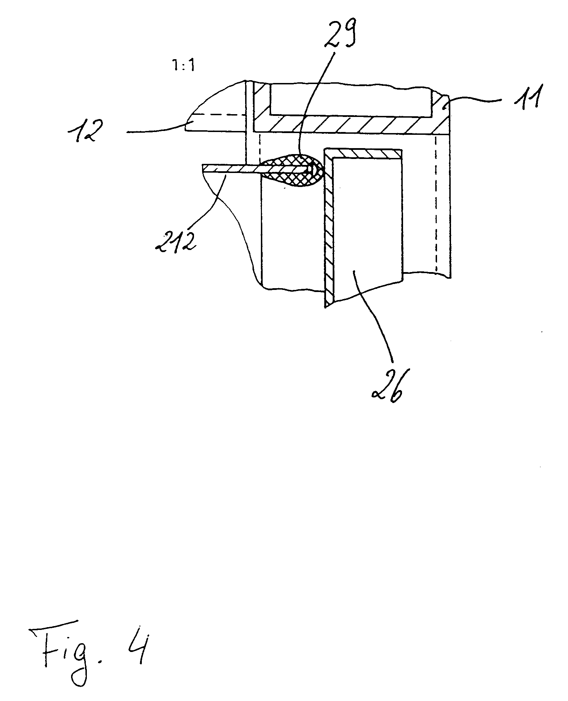

Gemäß Fig. 3 und 4 hat die Abdeckplatte 26 für den inneren Sammelbehälter 2 eine rechteckige Form und ist auf ihrer nach außen gerichteten Seite mit zwei gegenüberliegenden Haltegriffen 27 versehen. Entsprechend der räumlichen Anordnung der Dorne 22 werden herkömmliche Spannverriegelungen 28 auf der Abdeckplattenaußenseite angeordnet, um die Abdeckplatte 26 an den Dornen 22 festzulegen. Die Umrandung der Abdeckplatte 26 ist rechtwinklig nach außen umgebogen, so daß eine flache, formstarre Schale gebildet wird.

Am freien Rand des Sammelbehälters 2 ist eine Dichtung 29 vorgesehen, die in der Weise eines Keders über den freien Rand gestülpt ist.

Im folgenden wird die Funktion der erfindungsgemäßen Verpackungseinrichtung beschrieben.

Mittels einer Beladevorrichtung werden Pancakesätze automatisch auf die jeweiligen Dorne 22 aufgeschoben, bis die Pancakes 3 exakt an der Kreisringplatte 24 an der Rückseite 25 des Sammelbehälters 2 anliegen. In diesem Zustand liegen die jetzt an der Vorderseite 211 angeordneten Pancakes 3 im wesentlichen bündig mit der Stirnseite der jeweiligen Dorne 22. Nach Abschluß des automatischen Beladevorgangs, wird der Sammelbehälter 2 durch die Abdeckplatte 26 verschlossen. Bei Betätigung der Spannverriegelungen 28, zieht sich die Abdeckplatte 26 fest an die Dichtung 29 des Sammelbehälters 2 an, wobei der Behälterinnenraum staubfrei verschlossen, und die Pancakes 3 auf den Dornen 22 zusammengehalten werden.

Während des Transports der Verpackungseinrichtung werden auftretende Vibrationen oder Stöße vom Traggerüst 1 aufgenommen. Durch die freikragende Einspannung des Sammelbehälters 2 im Traggerüst 1 wird eine Übertragung dieser Vibrationen auf den Sammelbehälter 2 abgedämpft. Bei härteren Stößen wird die eingeleitete Energie in eine elastische oder teilplastische Verformung des Traggerüsts 1 umgewandelt, wodurch die Erschütterung des Sammelbehälters 2 gedämpft und eine Beschädigung vermieden wird.

Anstelle einer einseitigen, freikragenden Einspannung des Sammelbehälters 2 könnte dieser auch auf Luftpolster oder auf einem elastischen, nachgiebigen Material gelagert werden.

Zum Entladen des Sammelbehälters 2 wird auf entsprechende Weise die Abdeckplatte 26 von der Vorderseite 211 des Sammelbehälters 2 abgehoben und die Pancakesätze automatisch mit einer Entladevorrichtung entnommen. Hierfür hat die Entladevorrichtung zwei nicht gezeigte Aufnahmeschienen, die in die gegenüberliegenden Längsnuten 23 der Dorne 22 eingeführt werden. Am Endabschnitt der Aufnahmeschienen befindet sich jeweils ein vorgespannter Mitnehmerhaken, der mit den jeweiligen Haken der Kreisringplatten 24 in Eingriff bringbar ist. Somit dient die Kreisringplatte 24 auch auf der Entladevorrichtung als Endanschlag. Da jeder Dorn 22 mit einer angefasten Vorderkante versehen ist, kann sich dieser beim Heranbringen der Entladevorrichtung bis an die Stirnseite des Dorns 22 selbsttägig zentrieren, so daß ein sicheres Entladen gewährleistet ist.

Die äußeren Abmessungen des Traggerüsts 1 entsprechen den üblichen Europalettengrößen mit einem Breitenmaß von 1000 mm, einem Höhenmaß von 1092 mm und einem Tiefenmaß von 1200 mm.

Das Traggerüst 1 sowie der innere Sammelbehälter 2 sind vorzugsweise aus Stahl gefertigt, der als Korrosionsschutz mit einer Lack- oder Zinkschicht überzogen sein kann.

## Patentansprüche

1. Verpackungseinrichtung, insbesondere für Magnetbandwickel (3), **gekennzeichnet durch** eine Ausbildung als Verbundkonstruktion zwischen einem äußeren Traggerüst (1) und einem inneren Sammelbehälter (2), welcher innerhalb des Traggerüsts (1) absorbtionsgelagert ist, **wobei** der Sammelbehälter (2) in Richtung zur Vorderseite (211) frei auskragend an der Rückseite (25) am Traggerüst (1) befestigt und an seinen freikragenden Seitenleilen vom Traggerüst (1) beabstandet ist und **durch** wenigstens einen innerhalb des Sammelbehälters am Traggerüst (1) befestigten in Richtung auf die Vorderseite (211) frei auskragenden Dorn (22) zur Lagerung der Magnetbandwickel (3).

2. Verpackungseinrichtung nach Anspruch 1, **dadurch gekennzeichnet, daß** der Sammelbehälter (2) eine in sich geschlossene, aus Platten zusammengesetzte Wandung hat, die eine ebene innere Oberfläche ausbildet.

3. Verpackungseinrichtung nach Anspruch 1 oder 2, **dadurch gekennzeichnet, daß** das Traggerüst (1) einen Käfig aus mehreren Stegen (12, 14) und Holmen (11) bildet.

4. Verpackungseinrichtung nach einem der vorstehenden Ansprüche, **dadurch gekennzeichnet, daß** der Innenraum des Traggerüsts (1) auf der Vorder- bzw. Beschickungsseite (211) frei zugänglich ist.

5. Verpackungseinrichtung nach Anspruch 4, **dadurch gekennzeichnet, daß** der Sammelbehälter (2) nach der Vorderseite (211) des Traggerüsts (1) hin offen ist.

6. Verpackungseinrichtung nach einem der Ansprüche 1 bis 5, **dadurch gekennzeichnet, daß** der Dorn (22) am Traggerüst (1) biegesteif befestigt ist.

7. Verpackungseinrichtung nach einem der Ansprüche 1 bis 6, **dadurch gekennzeichnet, daß** vier Dorne (22) parallel im Abstand zueinander im Sammelbehälter (2) angeordnet sind.

8. Verpackungseinrichtung nach einem der Ansprüche 1 bis 7, **dadurch gekennzeichnet, daß** jeder Dorn (22) mindestens eine im wesentlichen über dessen gesamte Länge ausgebildete Längsnut (23) hat.

9. Verpackungseinrichtung nach einem der Ansprüche 1 bis 8, **dadurch gekennzeichnet, daß** jeder Dorn (22) an seinem freien Ende angefast ist.

10. Verpackungseinrichtung nach einem der Ansprüche 1 bis 9, **dadurch gekennzeichnet, daß** die Dorne (22) im wesentlichen in der Ebene der Vorderseite (211) des Sammelbehälters (2) enden und die Dorne (22) als Halter für eine Abdeckplatte (26) des Sammelbehälters (2) dienen.

11. Verpackungseinrichtung nach einem der Ansprüche 1 bis 10, **dadurch gekennzeichnet, daß** am befestigten Ende jedes Dorns (22) ein axial verschiebbarer Anschlag (24) aufgesteckt ist.

12. Verpackungseinrichtung nach Anspruch 11, **dadurch gekennzeichnet, daß** der Anschlag (24) als Kreisringplatte mit einer Eingriffsvorrichtung ausgebildet ist, die in der Längsnut (23) des jeweiligen Dorns (22) verschiebbar lagert.

13. Verpackungseinrichtung nach einem der Ansprüche 1 bis 12, **dadurch gekennzeichnet, daß** am Öffnungsrand des Sammelbehälters (2) eine umlaufende Dichtung (29) angeordnet ist.

14. Verpackungsbehältnis nach Anspruch 10, **dadurch gekennzeichnet, daß** die Abdeckplatte (26) an den freien Enden der Dorne (22) bzw. am Sammelbehälter (2) mittels herkömmlicher Spannverriegelungen (28) fixierbar ist.

15. Verpackungseinrichtung nach einem der vorstehenden Ansprüche, **dadurch gekennzeichnet, daß** das Traggerüst (1) für ein stabiles Übereinandestapeln mehrerer Verpackungseinrichtungen geeignete Anschlußstücke (13) an seiner Unterseite für den Eingriff in entsprechenden Steckformungen auf der Oberseite aufweist.

16. Verpackungseinrichtung nach einem der Ansprüche 3 bis 15, **dadurch gekennzeichnet, daß** die Stege (12, 14) und Holme (11) des Traggerüsts (1) aus Profilmaterial gefertigt sind.

17. Verpackungseinrichtung nach einem der vorstehenden Ansprüche, **dadurch gekennzeichnet, daß** das Traggerüst (1) und der Sammelbehälter (2) aus verzinktem Stahl gefertigt sind.

18. Verpackungseinrichtung nach einem der vorstehenden Ansprüche, **dadurch gekennzeichnet, daß** das Traggerüst (1) und der Sammelbehälter (2) mit einer Lackschicht überzogen ist.

19. Verpackungseinrichtung nach einem der vorstehenden Ansprüche, **dadurch gekennzeichnet, daß** das Traggerüst (1) und der Sammelbehälter (2) geschweißt sind.

20. Verpackungseinrichtung nach einem der vorstehenden Ansprüche, **dadurch gekennzeichnet, daß** die Abmessung des Traggerüsts (1) der Europalettengröße entspricht, die ein Breitenmaß von 1000 mm, ein Höhenmaß von 1092 mm und ein Tiefenmaß von 1200 mm vorsieht.

## Claims

1. A packing-container system, in particular for coils of magnetic tape (3), **characterized by** a composite structure comprising an outer support-frame (1) and an inner container (2) which is supported in a shock-absorbing manner inside said support frame (1), wherein the rear side (25) of said container (2) is fixed to said support frame (1) such that it protrudes towards the front (211) and such that its protruding side walls are spaced apart from said support frame (1), and by at least one mandrel (22) inside said container which is fixed to said support frame (1) and protrudes towards the front (211), for supporting the coils of magnetic tape (3).

2. A packing-container system according to claim 1, **characterized in that** said container (2) has a closed wall composed of plates which forms an even inner surface.

3. A packing-container system according to claim 1 or 2, **characterized in that** said support frame (1) is a cage formed of several bars (12, 14) and struts (11).

4. A packing-container system according to one of the preceding claims, **characterized in that** the interior space of said support frame (1) is freely accessible on the front side and on the loading side (211), respectively.

5. A packing-container system according to claim 4, **characterized in that** said container (2) is open towards the front (211) of said support frame (1).

6. A packing-container system according to one of the claims 1 to 5, **characterized in that** said mandrel (22) is rigidly fixed to said support frame (1).

7. A packing-container system according to one of the claims 1 to 6, **characterized in that** four mandrels (22) are arranged in parallel at a distance from each other in said container (2).

8. A packing-container system according to one of the claims 1 to 7, **characterized in that** each mandrel (22) has at least one longitudinal groove (23) which extends substantially over its entire length.

9. A packing-container system according to one of the claims 1 to 8, **characterized in that** the free end of every mandrel (22) is tapered.

10. A packing-container system according to one of the claims 1 to 9, **characterized in that** said mandrels (22) end substantially in the plane of the front (211) of said container (2), and that said mandrels (22) serve as a support for a covering plate (26) of said container (2).

11. A packing-container system according to one of the claims 1 to 10, **characterized in that** an axially slidable stop (24) is mounted on the fixed end of each mandrel (22).

12. A packing-container system according to claim 11, **characterized in that** said stop (24) is formed as a circular ring plate having an engaging means which is slidably supported in the longitudinal groove (23) of the respective mandrel (22).

13. A packing-container system according to one' of the claims 1 to 12, **characterized in that** a sealing (29) is disposed around the opening rim of said container (2).

14. A packing container according to claim 10, **characterized in that** the cover plate (26) can be fixed to the free ends of said mandrels (22) and to said container (2), respectively, by means of customary clamping devices (28).

15. A packing-container system according to one of the preceding claims, **characterized in that** for a stable stacking of several packing-container systems said support frame (1) has suitable connectors (13) at is lower side for engagement with corresponding recesses on the upper side.

16. A packing-container system according to one of the claims 3 to 15, **characterized in that** the bars (12, 14) and struts (11) of said support frame (1) are made of profiled material.

17. A packing-container system according to one of the preceding claims **characterized in that** said support frame (1) and said container (2) are made of galvanized steel.

18. A packing-container system according to one of the preceding claims, **characterized in that** said support frame (1) and said container (2) are covered with a coat of lacquer.

19. A packing-container system according to one of the preceding claims, **characterized in that** said support frame (1) and said container (2) are welded.

20. A packing-container system according to one of the preceding claims, **characterized in that** the dimensions of said support frame (1) correspond to the Europalett size which specifies a width of 1000 mm, a height of 1092 mm and a depth of 1200 mm.

## Revendications

1. Dispositif d'emballage, en particulier pour bobines plates (3) de bande magnétique, caractérisé par une réalisation sous forme de construction composite, entre un bâti-support extérieur (1) et un récipient collecteur (2) intérieur, monté, avec fonction d'absorption, à l'intérieur du bâti-support (1), le récipient collecteur (2) étant fixé orienté dans la direction de la face avant (211) en ressortant librement en face arrière (25) sur le bâti-support (1) et espacé du bâti-support (1) à ses points latéraux sortant librement et caractérisé par au moins un mandrin (22), sortant librement dans la direction de la face avant (211) et fixé sur le bâti-support (1) à l'intérieur du récipient collecteur, le mandrin étant destiné au montage de la bobine plate de bande magnétique.

2. Dispositif d'emballage selon la revendication 1, caractérisé en ce que le récipient collecteur (2) a une paroi fermée sur elle-même, composée de plaques, constituant une surface intérieure plane.

3. Dispositif d'emballage selon la revendication 1 ou 2, caractérisé en ce que le bâti-support (1) constitue une cage constituée de plusieurs traverses (12, 14) et montants (11).

4. Dispositif d'emballage selon l'une des revendications précédentes, caractérisé en ce que l'espace intérieur du bâti-support (1) est accessible librement depuis le côté avant, respectivement de chargement (211).

5. Dispositif d'emballage selon la revendication 4, caractérisé en ce que le récipient collecteur (2) est ouvert en direction de la face avant (211) du bâti-support (1).

6. Dispositif d'emballage selon l'une des revendications 1 à 5, caractérisé en ce que le mandrin (22) est fixé sur le bâti-support (1) en présentant une rigidité en flexion.

7. Dispositif d'emballage selon l'une des revendications 1 à 6, caractérisé en ce que sont prévus quatre mandrins (22), disposés parallèlement et à distance les uns des autres dans le récipient collecteur (2).

8. Dispositif d'emballage selon l'une des revendications 1 à 7, caractérisé en ce que chaque mandrin (22) a au moins une rainure longitudinale (23) réalisée pratiquement sur toute sa longueur.

9. Dispositif d'emballage selon l'une des revendications 1 à 8, caractérisé en ce que chaque mandrin (22) est chanfreiné à son extrémité libre.

10. Dispositif d'emballage selon l'une des revendications 1 à 9, caractérisé en ce que les mandrins (22) s'achèvent sensiblement dans le plan de la face avant (211) du récipient collecteur (2), les mandrins (22) servant de support pour une plaque de recouvrement (26) du récipient collecteur (2).

11. Dispositif d'emballage selon l'une des revendications 1 à 10, caractérisé en ce qu'une butée (24) déplaçable axialement est enfilée à l'extrémité libre de chaque mandrin (22).

12. Dispositif d'emballage selon la revendication 11, caractérisé en ce que la butée (24) est réalisée sous forme de plaque en forme d'anneau de cercle avec un dispositif d'engagement qui est monté déplaçable dans la rainure longitudinale (23) du mandrin (22) respectif.

13. Dispositif d'emballage selon l'une des revendications 1 à 12, caractérisé en ce qu'un joint d'étanchéité de pourtour (29) est disposé sur le bord de l'ouverture du récipient collecteur (2).

14. Récipient d'emballage selon la revendication 10, caractérisé en ce que la plaque de recouvrement (26) peut être fixée sur les extrémités libres des mandrins (22), respectivement sur le récipient collecteur (2), au moyen de verrouillages à serrage (28) classiques.

15. Dispositif d'emballage selon l'une des revendications précédentes, caractérisé en ce que le bâti-support (2) présente, pour permettre un empilement de superposition stable de plusieurs dispositifs d'emballage, des pièces de raccordement (13) appropriées sur sa face inférieure, pour l'engagement dans des reliefs d'enfichage correspondants ménagés sur sa face supérieure.

16. Dispositif d'emballage selon l'une des revendications 3 à 15, caractérisé en ce que les traverses (12, 14) et les montants (11) du bâti-support (1) sont en un matériau profilé.

17. Dispositif d'emballage selon l'une des revendications précédentes, caractérisé en ce que le bâti-support (1) et le récipient collecteur (2) sont en acier galvanisé.

18. Dispositif d'emballage selon l'une des revendications précédentes, caractérisé en ce que le bâti-support (1) et le récipient collecteur (2) sont recouverts d'une couche de vernis.

19. Dispositif d'emballage selon l'une des revendications précédentes, caractérisé en ce que le bâti-support (1) et le récipient collecteur (2) sont soudés.

20. Dispositif d'emballage selon l'une des revendications précédentes, caractérisé en ce que la dimension du bâti-support (1) correspond à celle de la taille de l'Europalette, prévoyant une largeur de 1000 mm, une hauteur de 1092 mm et une profondeur de 1200 mm.
